# EUROPEAN PATENT APPLICATION

(11) **EP 4 733 163 A1**
(43) Date of publication of application: **29.04.2026**
(21) Application number: 25207815.9
(22) Date of filing: 09.10.2025
(51) Int. Cl.: B60V 1/00, B64D 31/12

(54) **PROCESS FOR SETTING A PHASE BETWEEN THE ENGINES OF A MULTI-ENGINE AIRCRAFT**

(30) Priority: 23.10.2024 US 202463710950 P
(71) Applicant: Airbus Operations (S.A.S.), 31060 Toulouse Cedex 9 (FR); Airbus Operations GmbH, 21129 Hamburg (DE)
(72) Inventor: WANDEL, Martin, HAMBURG (DE); BESLUAU, François, TOULOUSE (FR); LIGU, Christophe, TOULOUSE (FR); KEMME, Ralf, TOULOUSE (FR); PILON, Nicolas, TOULOUSE (FR); COSTES, Thibaud, TOULOUSE (FR)
(74) Representative: Cabinet Le Guen Maillet

(57) **Abstract**

The invention relates to a process (9) for setting a phase between the engines (3) of a multi-engine aircraft (A) to minimize cabin noise and vibration, the aircraft (A) comprising a master engine (3a) and at least one slave engine (3b), each engine (3) being coupled to a fan or a propeller, the process (9) comprising the steps of:
a)performing a first synchronization step (91) aimed at minimizing vibration; and
b) performing a second fine-tuning step (92) aimed at minimizing noise.

Such a process makes it possible to reduce, in a simple and reliable manner, the vibrations and noise emitted by a multi-engine aircraft.

## Description

### TECHNICAL FIELD

The present invention relates generally to controlling aircraft cabin noise and vibration on multi-engine propeller driven or fan turbine powered aircraft. More particularly, the present invention relates to a method for synchronizing the propellers or fans of the aircraft by maintaining a certain phase angle offset between the blades of a master propeller/fan and the blades of each slave propeller/fan of the aircraft so as to reduce cabin noise to a minimum level and cabin vibration to a near minimum level.

### PRIOR ART

It is well known that the asynchronous operation of bladed propulsors, such as propellers and fans, on multi-engine aircraft generates acoustic cabin noise and cabin vibrations which may be disruptive to passengers. Each of the propellers or fans creates airflow disturbances and waves as its blades rotate through the air flowing past the propeller or fan. Furthermore, any slight rotor imbalance acts on the propulsor shaft and is transmitted to and excites the aircraft structure, causing vibrations. As a result, acoustic noise and vibrations are generated which are felt in the aircraft cabin.

A known method of minimizing cabin noise generated by the asynchronous operation of the bladed propulsors on multi-engine aircraft is to maintain a phase angle difference between the blades of a master propulsor and the blades of one or more slave propulsors. This technic results in an interaction of the airflow disturbances created by the propulsors so as to at least partially cancel each other thereby reducing to varying degree the noise transmitted to the cabin.

Similarly, by proper phase angle selection, interaction may be generated which results in mutual cancellation of the mechanical excitations from the imbalance in the propulsors so as to reduce cabin vibration. That is, the blades of each slave propulsor are circumferentially offset from the corresponding blades of the master propulsor by a desired phase angle which has been determined to be that phase angle offset at which the beating noise characteristic of asynchronous operation is minimized.

A significant drawback of these conventional methods, however, is that the phase angle offset that results in minimum cabin noise is rarely the same as the phase angle offset that produces minimum cabin vibration. The dominant noise component is a function of the blade passage frequency, whereas vibration is a harmonic of the propulsor's rotational speed. Consequently, optimizing the phase for minimal noise may lead to an unacceptable level of vibration, and conversely, optimizing for minimal vibration may result in excessive noise. This conflict forces a compromise that fails to achieve optimal passenger comfort.

Therefore, there is a need for an improved method and system for determining a single, optimal phase setting that effectively reconciles the conflicting requirements for noise and vibration reduction, in order to provide a more comprehensive solution to passenger discomfort.

### SUMMARY OF THE INVENTION

An object of the present invention is to propose a process for setting a phase between the engines of a multi-engine aircraft to minimize cabin noise and vibration, the aircraft comprising a master engine and at least one slave engine, each engine being coupled to a fan or a propeller, the process comprising the steps of:
a) performing a first synchronization step aimed at minimizing vibration, comprising:
   i. introducing a first rotational speed difference between the rotational speed of the slave engine and the rotational speed of the master engine to induce a first continuous phase shift;
   ii. measuring, with an accelerometer installed in said aircraft, a vibration value during said phase shift;
   iii. identifying a first phase corresponding to a detected minimal vibration;
   iv. synchronizing the rotational engine speeds of the master engine and of the slave engine to maintain said first phase;
b) performing a second fine-tuning step aimed at minimizing noise, comprising:
   i. measuring, with a microphone installed in said aircraft, a reference cabin noise value when the rotational engine speeds are synchronized and the first phase is maintained;
   ii. introducing a second rotational speed difference between the rotational speed of the slave engine and the rotational speed of the master engine to induce a second localized phase shift in a localized phase shift range which is around said first minimal vibration phase;
   iii. measuring an altered cabin noise value during said second localized phase shift;
   iv. identifying a second phase corresponding to a detected minimal noise within said localized phase shift range;
   v. synchronizing the rotational engine speeds of the master engine and of the slave engine to maintain said second phase.

With such a process, it is possible to determine a single, optimal phase setting that effectively reconciles the conflicting requirements for noise and vibration reduction, in order to provide a more comprehensive solution to passenger discomfort.

Advantageously, the step of introducing a first rotational speed difference between the rotational speed of the slave engine and the rotational speed of the master engine to induce a first continuous phase shift is achieved by setting the rotational speed of the slave engine to be slightly higher than the rotational speed of the master engine.

Advantageously, the process further comprises a control loop step wherein, the step of introducing a second rotational speed difference between the rotational speed of the slave engine and the rotational speed of the master engine to induce a second localized phase shift and the step of measuring an altered cabin noise during said second localized phase shift are repeated in a loop till a detected minimal noise within said localized phase shift range is identified.

Advantageously, the step of introducing a second rotational speed difference between the rotational speed of the slave engine and the rotational speed of the master engine to induce a second localized phase shift is firstly achieved by setting the rotational speed of the slave engine to be slightly lower than the rotational speed of the master engine and, if the altered cabin noise value measured in step is not lower than the reference cabin noise value, the rotational speed of the slave engine is secondly set to become slightly higher than the rotational speed of the master engine to reverse the direction of the phase shift.

The invention also proposes a system for setting a phase between the engines of a multi-engine aircraft to minimize cabin noise and vibration, the system comprising:
- a master engine and at least one slave engine, each engine being coupled to a fan or a propeller;
- for each engine: an engine controller, a rotational speed sensor and an angular position sensor;
- at least one accelerometer installed in said aircraft for measuring a vibration value;
- at least one microphone installed in said aircraft for measuring a noise value;
- an aircraft controller.

The aircraft controller and the engine controllers of the system are configured to:
- introduce a first rotational speed difference between the rotational speed of the slave engine and the rotational speed of the master engine to induce a first continuous phase shift;
- receive the vibration value measured by said accelerometer during said first continuous phase shift;
- identify a first phase corresponding to a detected minimal vibration;
- synchronize the rotational engine speeds to maintain said first phase;
- receive the noise value measured by said microphone while the rotational engine speeds are synchronized and the first phase is maintained;
- introduce a second rotational speed difference between the rotational speed of the slave engine and the rotational speed of the master engine to induce a second localized phase shift in a localized phase shift range which is around said first minimal vibration phase;
- receive the noise value measured by said microphone during said second localized phase shift;
- identify a second phase corresponding to a detected minimal noise within said localized phase shift range;
- synchronize the rotational engine speeds to maintain said second phase.

Advantageously, said at least one microphone and said at least one accelerometer are installed on an external skin of a fuselage of the aircraft or inside a cabin of the aircraft. Preferably, the at least one microphone and the at least one accelerometer may be installed on the passenger floor inside the cabin.

Advantageously, said at least one microphone and said at least one accelerometer are installed along a longitudinal axis of the aircraft.

Advantageously, said at least one microphone and said at least one accelerometer are installed in a horizontal plane comprising the fan or the propeller of the aircraft.

Advantageously, the aircraft controller is connected to said at least one microphone, said at least one accelerometer, and said engine controllers to receive position data and to determine and command the rotational speeds of the engines.

Advantageously, the engine controllers are each configured to receive information from the angular position and rotational speed sensors of the engines, to transmit this information to the aircraft controller, and to execute the speed commands received from the aircraft controller.

The invention also proposes a computer program product comprising instructions for implementing, by an aircraft, the process previously described, when said program is executed by a processor of the aircraft.

The invention also proposes a storage medium storing a computer program comprising instructions for implementing, by an aircraft, the previously described, when said program is executed by a processor of the aircraft.

### BRIEF DESCRIPTION OF THE DRAWINGS

The abovementioned features of the invention, along with others, will become more clearly apparent upon reading the following description of one exemplary embodiment, said description being given with reference to the appended drawings, in which:
Fig. 1 is a top view of an aircraft according to the invention,
Fig. 2 schematically illustrates the process according to the invention;
Fig. 3a is a graph illustrating the principle of constructive interference;
Fig. 3b is a graph illustrating the principle of destructive interference;
Fig. 4 is a graph illustrating the beating phenomenon resulting from slightly different frequencies; and
Fig. 5 is a schematic graph illustrating the relationship between phase, noise amplitude, and vibration amplitude, showing that their respective minima generally do not coincide.

### DETAILED DESCRIPTION OF EMBODIMENTS

For a better understanding of the invention, it is useful to describe the physical principles governing noise and vibration in a multi-engine aircraft. The disturbances perceived in the cabin primarily originate from two distinct types of tonal sources. On one hand, structural vibration, related to the propulsor's rotational frequency (1p), is mainly caused by slight mechanical imbalances inherent to each engine. On the other hand, aerodynamic noise, the dominant component of which is the Blade Pass Frequency (BPF1) and its harmonics, is generated by the pressure waves created by each blade cutting through the air.

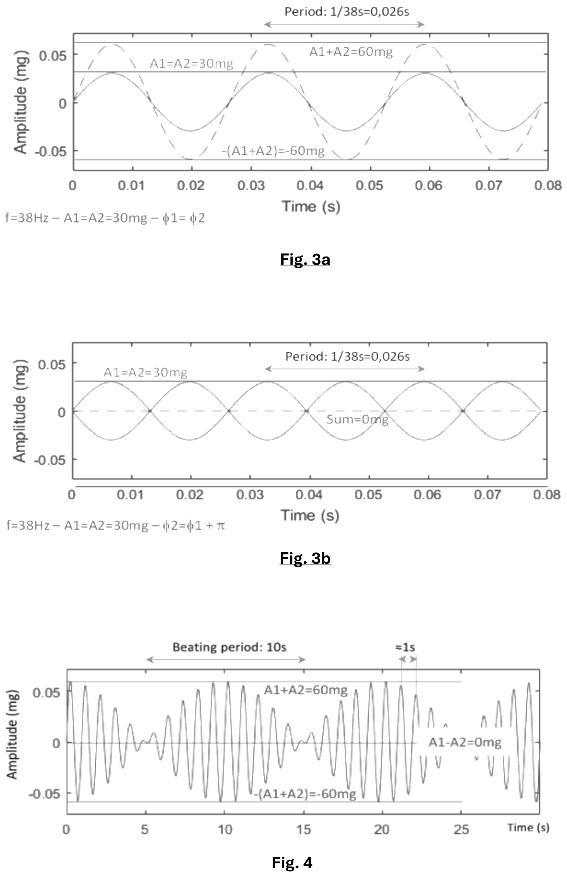

The principle of synchrophasing relies on controlling the interference between two tonal sources of the same frequency. As illustrated in Figs. 3a and 3b, by adjusting the phase difference (Φ) between the two sources, it is possible to modulate the amplitude of the resulting signal. As illustrated in Fig. 3a, a null or aligned phase causes constructive interference, maximizing the amplitude (of noise or vibration). Conversely, and as illustrated in Fig. 3b, an opposite phase (a 180-degree phase shift in this example) creates destructive interference, minimizing the amplitude. The accurate control of the phase therefore allows for the control of the noise or vibration level.

This control is only possible if the engines rotate at strictly identical speeds (synchronization). If the rotational speeds are slightly different, a beating phenomenon occurs, as shown in Fig. 4. This results in a cyclical variation of the noise and vibration amplitude, which is perceived as very uncomfortable by passengers. Speed synchronization is therefore a prerequisite for effective synchrophasing.

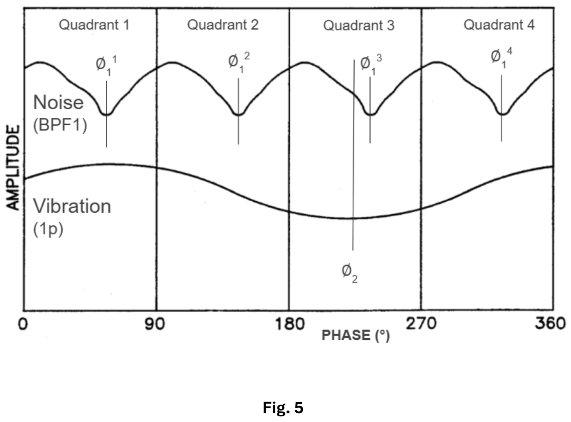

However, a fundamental technical conflict exists, as the optimal phase for minimizing noise is generally not the same as the one for minimizing vibration. As schematically illustrated in Fig. 5, the point of minimal vibration (referenced Ø₂ in Fig. 5) rarely coincides with one of the points of minimal noise (referenced Ø₁ⁱ in Fig. 5). Choosing a setting for one inevitably degrades the other. The invention aims to solve this problem by finding an operating point that optimizes both parameters simultaneously, based on a thorough understanding of this conflict.

The present invention will now be described more fully hereinafter with reference to the accompanying drawings, in which preferred embodiments of the invention are shown. This invention may, however, be embodied in many different forms and should not be construed as limited to the embodiments set forth herein.

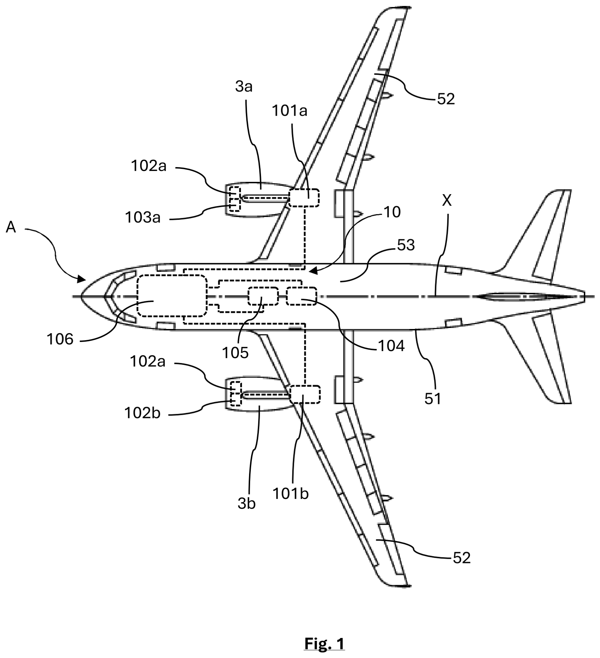

Referring to Fig.1, a general overview of a system 10 according to an embodiment of the invention is shown. More particularly, Fig. 1 shows a multi-engine aircraft A that has a fuselage 51 and a wing 52 on each side of the fuselage 51. At least one engine 3a, 3b is fastened beneath each wing 52. Each engine 3a, 3b is coupled to a fan or a propeller. A cabin 53 is provided inside the fuselage 51 and comprises, for example, rows of seats intended to accommodate passengers on aircraft A.

By convention, X denotes the longitudinal axis of the aircraft A and Y denotes the transverse axis of the aircraft A, this axis being horizontal when the aircraft is on the ground. According to the invention, the aircraft A is equipped with a master engine 3a and at least one slave engine 3a (as illustrated). The system 10 includes, for each engine 3a, 3b, a rotational speed sensor 102a, 102b, an angular position sensor 103a, 103b, and an engine controller 101a, 101b. More particularly, the rotational speed sensor and the angular position sensor are configured to measure the rotational speed RPM1, RPM2 and the angular position POS1, POS2 of a reference blade relative to a fixed position, such as the vertical high point at 12 o'clock. The difference between the angular position POS2 of the slave engine 3b and the angular position POS1 of the master engine 3a defines the phase between the two propulsors or fans.

The system 10 further comprises at least one accelerometer 104 configured to measure a value of vibration, and at least one microphone 105 configured to measure a value of noise. Said sensors are installed in the aircraft A.

The system further comprises an aircraft controller 106 that forms the core of the system's logic. The aircraft controller 106 is communicatively coupled to the engine controllers 101a, 101b of the engine 3a, 3b. The engine controllers 101a, 101b are each configured to collect information from the rotational speed 102a, 102b and angular position 103a, 103b sensors and to transmit this information to the aircraft controller106. The aircraft controller106 is connected to the microphone 105 and the accelerometer 104 to receive noise and vibration data, respectively. Based on all received inputs, the aircraft controller 106 is configured to determine and command the required engine speeds RPM1, RPM2 to the engine controllers 101a, 101b in order to execute the phase setting process as described below.

In preferred embodiments, the accelerometer 104 and the microphone 105 may be installed on an external skin of the aircraft's fuselage 51 or, preferably, inside the cabin 53. Preferably, the microphone 105 and the accelerometer 104 may be installed on the passenger floor. To maximize sensitivity, they are preferably located along the longitudinal axis X of the aircraft A and/or in the horizontal plane XY of the fans or propellers.

In this manner, accuracy and reliability of the vibration and noise measurement are improved. By specifying an optimal location for the accelerometer and the microphone, it ensures that the sensors measure the most relevant signal with the best signal-to-noise ratio and the primary noise source, leading to a more precise identification of the minimal vibration phase (PH2) and enabling a more exact identification of the minimal noise phase (PH1).

Before describing the inventive process 9, it is useful to understand the underlying technical problem. As illustrated schematically in Fig. 5 and as detailed above, the phase angle that yields minimum vibration (Vibration 1p) typically does not coincide with the phase angle that yields minimum noise (Noise BPF1). The inventive process described herein resolves this conflict by identifying a single phase setting that represents the best compromise between these two competing objectives.

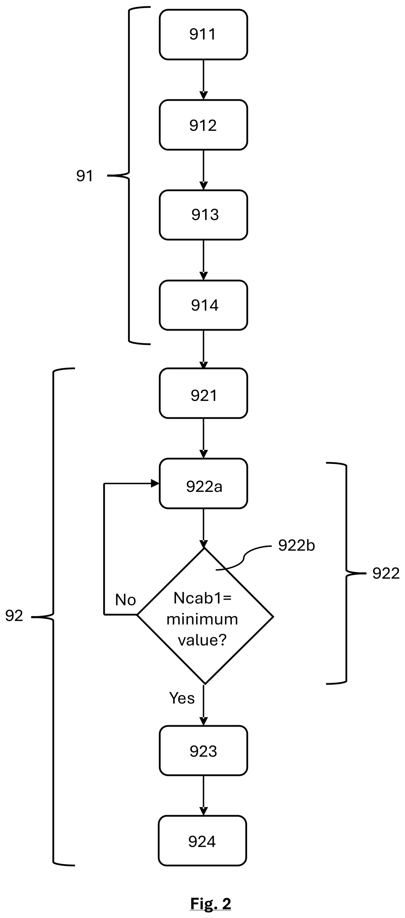

The process 9 for determining the optimal phase setting and setting the phase between the engines 3a, 3b of the aircraft A will now be described with reference to the flowchart in Fig. 2. The process 9 is preferably initiated when the aircraft A is in a suitable flight phase.

The process 9 begins with performing a first synchronization step 91 aimed at minimizing vibration and then a second fine-tuning step 92 aimed at minimizing noise.

In the preferred embodiment illustrated therein, the first synchronization step 91 comprises a step 911 of introducing a first rotational speed difference between the rotational speed RPM2 of the slave engine 3b and the rotational speed RPM1 of the master engine 3a to induce a first continuous phase shift. During this step 911, the aircraft controller 106 commands the engine controller 101b to set the rotational speed RPM2 of the slave engine 3b to be slightly higher than the rotational speed RPM1 of the master engine 3a. This rotational speed difference induces a continuous and progressive phase shift between the engines 3a and 3b.

The first synchronization step 91 further comprises a step 912 of measuring, with the accelerometer 104 installed in the aircraft A, a vibration value during said phase shift. In other words, while the phase is shifting, the aircraft controller 106 continuously measures the vibration value via the accelerometer 104.

The first synchronization step 91 further comprises a step 913 of identifying a first phase PH2 corresponding to a detected minimal vibration. During this step 913, the aircraft controller 106 detects when the measured vibration passes through a minimum value (e.g., where its derivative is zero). The phase value at this point is identified and stored as the phase PH2 of minimal vibration.

Once the first phase PH2 is found, the aircraft controller 106 commands the engine controller 101a, 101b to synchronize (914) the rotational engine speeds (RPM1 = RPM2), thereby stopping the phase shift and locking the system 10 at this optimal vibration phase (e.g. at the first phase PH2).

Referring to Fig. 5, it is easier to understand how this first synchronization step 91 minimizes vibrations. Indeed, Fig. 5 shows that the minimum vibration occurs when the phase is at Ø₂ (here at an angle of approximately 225°). During the first synchronization step 91, the process therefore consists of varying the phase angle between the two motors over 360° in order to identify, using data from the accelerometer 104, the phase angle at which Ø₂ is located (i.e., the phase angle at which vibration is minimal).

Next, a second fine-tuning step 92 is performed to minimize noise in the vicinity of PH2. To do so, the second fine-tuning step 92 comprises a step 921 of measuring 921, with the microphone 105 installed in the aircraft A, a reference cabin noise value Ncab0 when the rotational engine speeds RPM1 and RPM2 are synchronized and the first phase PH2 is maintained. In other words, with the engines 3a, 3b running at first phase PH2, the aircraft controller 106 measures the noise value via the microphone 105 to establish a baseline noise reference value Ncab0.

The second fine-tuning step 92 also comprises a step 922a of introducing a second rotational speed difference between the rotational speed RPM2 of the slave engine 3b and the rotational speed RPM1 of the master engine 3a to induce a second localized phase shift. This second localized phase shift is performed in a localized phase shift range which is around the first minimal vibration phase PH2. During this step 922a, the aircraft controller 106 initiates a localized phase search around PH2. This may be achieved by commanding the engine controller 101b to modify the slave engine rotational speed RPM2 relative to the master rotational engine speed RPM1, causing the phase to shift from PH2.

The second fine-tuning step 92 further comprises a step 922b of measuring, with the microphone 105, an altered noise value Ncab1 during said second localized phase shift. In other words, while the phase is shifting, the aircraft controller 106 continuously measures the noise value via the microphone 105.

The second fine-tuning step 92 further comprises a step 923 of identifying a second phase PH1 corresponding to a detected minimal noise within said localized phase shift range. The phase at which this minimum noise occurs is identified and stored as the optimal phase (e.g. the second phase PH1). This second phase PH1 is, by design, the point of minimum noise located in the sector closest to the point of minimum vibration (e.g. the closest to the first phase PH2).

Once the second phase PH1 is found, the controller 106 commands the engine controller 101a, 101b to synchronize 924 the rotational engine speeds RPM1 = RPM2 of the master 3a and slave 3b engines to be equalized (RPM2 = RPM1), thereby stopping the second localized phase shift and locking the system 10 at this optimal phase (e.g. at the second phase PH1). Referring to Fig. 5, it is easier to understand how this second fine-tuning step 92 minimizes noise. Indeed, Fig. 5 shows that the phase angle at which noise is minimal is closest to the phase angle at which vibration is minimal (i.e. at first phase PH2 or Ø₂) is located at Ø₁³ (here at an angle of approximately 240°). During the second fine-tuning step 92, the process therefore consists of varying the phase angle around the first phase angle PH2 determined previously. The phase angle (referenced Ø₁ⁱ in Fig. 5) where noise is minimal may be less than or greater (as in this example) than the first phase angle PH2 (which corresponds to Ø₂ in Fig. 5).

In the example in Fig. 5, the motor has four blades, which means that the signal representing the noise is repeated four times over a complete rotation of the motor (i.e., over 360°). It is therefore clear that if the motor had six blades, the signal would be represented six times over 360°, and so on.

To determine the phase angle Ø₁ⁱ closest to the first phase PH2, it is therefore necessary to vary the phase angle within the localized phase shift range, which corresponds to the extent of a quadrant, and which is here 90° because of the four-bladed motor. Thus, in this example, the phase angle can be varying between plus or minus 45° around the first phase PH2 to identify the phase angle having the minimal noise. It is easy to understand that if the motor had six blades, the phase angle would have six quadrants of 60° each and the phase angle would be varying by plus or minus 30° to identify the phase angle having the minimal noise.

The second fine-tuning step 92 thus permits to find the second phase PH1, which is therefore the phase Ø₁ⁱ closest to the first phase PH2 (which corresponds to Ø2 in Fig. 5).

The second phase, PH1, is therefore a compromise that focuses on noise rather than vibrations.

Preferably, the system 10 then operates with a corrective feedback loop to ensure this second phase PH1 is maintained, providing the best achievable comfort for passengers by minimizing noise while keeping vibration close to its minimum. It thus ensures the stability and robustness of the solution over time. A simple initial setting could be insufficient against inflight disturbances. The corrective feedback loop guarantees that the second phase (PH1) is dynamically maintained, thus ensuring consistent comfort for passengers throughout the flight.

In a preferred embodiment, the step 911 of introducing a first rotational speed difference between the rotational speed RPM2 of the slave engine 3b and the rotational speed RPM1 of the master engine 3a to induce a first continuous phase shift is achieved by setting the rotational speed RPM2 of the slave engine 3b to be slightly higher than the rotational speed RPM1 of the master engine 3a. This slight rotational speed difference between the master engine 3a and the slave engine 3b thus continuously increases the phase shift between the engines 3a and 3b over a complete phase shift of 360°.

In another preferred embodiment (compatible with the previous ones), the process 9 further comprises a control loop step 922 wherein, the step of introducing 922a a second rotational speed difference between the rotational speed RPM2 of the slave engine 3b and the rotational speed RPM1 of the master engine 3a to induce a second localized phase shift and the step of measuring 922b an altered cabin noise Ncab1 during said second localized phase shift are repeated in a loop till a detected minimal noise within said localized phase shift range is identified 923. To do so, the aircraft controller106 measures the altered noise value Ncab1 while shifting up and down the phase around the value of the first phase PH2 where the minimal vibration is. Shifting up the phase is achieved by setting the rotational speed RPM2 of the slave engine 3b slightly higher than the rotational speed RPM1 of the master engine 3a. Shifting down the phase is achieved by setting the rotational speed RPM2 of the slave engine 3b slightly lower than the rotation speed RPM1 of the master engine 3a. The aircraft controller 106 compares this altered noise value to the reference noise value Ncab0. If the noise is found to be increasing (Ncab1 > Ncab0), it indicates the search is moving away from the noise minimum. The aircraft controller 106 then reverses the search, causing the reverse of the phase shifting. This control loop step 922 continues until, the aircraft controller 106 identify (at step 923) the minimum noise value.

Preferably, during the control loop step 922, the step 922a of introducing a second rotational speed difference between the rotational speed RPM2 of the slave engine 3b and the rotational speed RPM1 of the master engine 3a to induce a second localized phase shift is firstly achieved by setting the rotational speed RPM2 of the slave engine 3b to be slightly lower than the rotational speed RPM1 of the master engine 3a and, if the altered cabin noise value Ncab1 measured at step 922b is not lower than the reference cabin noise value Ncab0, the rotational speed RPM2 of the slave engine 3b is secondly set to become slightly higher than the rotational speed RPM1 of the master engine 3a to reverse the direction of the phase shift. In other words, if the noise is found to be increasing (Ncab1 > Ncab0) when the rotational speed RPM2 of the slave engine 3b is decreased, the aircraft controller 106 then reverses the search direction by commanding the rotational speed RPM2 of the slave engine 3b to become slightly higher than the rotational speed RPM1 of the master engine 3a, causing the phase to shift upwards.

The aircraft controller 106 and the engine controllers 101a, 101b described herein may include a processing unit and a memory which has stored therein computer program product or computer-executable instructions for implementing the process described herein. The processing unit may comprise any suitable devices configured to cause a series of steps to be performed so as to implement the method such that instructions, when executed by the computing device or other programmable apparatus, may cause the functions/acts/steps specified in the process described herein to be executed. The processing unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory may be any suitable known or other machine-readable storage medium. The memory may comprise non-transitory computer readable storage medium such as, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to the device such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. The memory may comprise any storage means (e.g., devices) suitable for retrievably storing the computer-executable instructions executable by processing unit.

The process and system described herein may be implemented in a high-level procedural or object-oriented programming or scripting language, or a combination thereof, to communicate with or assist in the operation of the controller or computing device. Alternatively, the process and system described herein may be implemented in assembly or machine language. The language may be a compiled or interpreted language. Program code for implementing the process and system described herein may be stored on the storage media or the device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Computer-executable instructions may be in many forms, including modules, executed by one or more computers or other devices. Generally, modules include routines, programs, objects, components, data structures, etc., that perform particular tasks or implement particular abstract data types. Typically, the functionality of the modules may be combined or distributed as desired in various embodiments.

It will be appreciated that the system and components thereof may utilize communication through any of various network protocols such as TCP/IP, Ethernet, FTP, HTTP and the like, and/or through various wireless communication technologies such as GSM, CDMA, Wi-Fi, and WiMAX, is and the various computing devices described herein may be configured to communicate using any of these network protocols or technologies.

## Claims

1. Process (9) for setting a phase between the engines (3a, 3b) of a multi-engine aircraft (A) to minimize cabin noise and vibration, the aircraft (A) comprising a master engine (3a) and at least one slave engine (3b), each engine (3) being coupled to a fan or a propeller, the process (9) comprising the steps of:
a) performing a first synchronization step (91) aimed at minimizing vibration, comprising:
i. introducing (911) a first rotational speed difference between the rotational speed (RPM2) of the slave engine (3b) and the rotational speed (RPM1) of the master engine (3a) to induce a first continuous phase shift;
ii. measuring (912), with an accelerometer (104) installed in said aircraft (A), a vibration value during said phase shift;
iii. identifying (913) a first phase (PH2) corresponding to a detected minimal vibration;
iv. synchronizing (914) the rotational engine speeds (RPM1, RPM2) of the master engine (3a) and of the slave engine (3b) to maintain said first phase (PH2);
b) performing a second fine-tuning step (92) aimed at minimizing noise, comprising:
i. measuring (921), with a microphone (105) installed in said aircraft (A), a reference cabin noise value (Ncab0) when the rotational engine speeds (RPM1, RPM2) are synchronized and the first phase (PH2) is maintained;
ii. introducing (922a) a second rotational speed difference between the rotational speed (RPM2) of the slave engine (3b) and the rotational speed (RPM1) of the master engine (3a) to induce a second localized phase shift in a localized phase shift range which is around said first minimal vibration phase (PH2);
iii. measuring (922b) an altered cabin noise value (Ncab1) during said second localized phase shift;
iv. identifying (923) a second phase (PH1) corresponding to a detected minimal noise within said localized phase shift range;
v. synchronizing (924) the rotational engine speeds (RPM1, RPM2) of the master engine (3a) and of the slave engine (3b) to maintain said second phase (PH1).

2. Process (9) according to claim 1, **characterized in that** the step (911) of introducing a first rotational speed difference between the rotational speed (RPM2) of the slave engine (3b) and the rotational speed (RPMI) of the master engine (3a) to induce a first continuous phase shift is achieved by setting the rotational speed (RPM2) of the slave engine (3b) to be slightly higher than the rotational speed (RPM1) of the master engine (3a).

3. Process (9) according to claim 1 or 2, **characterized in that** the process (9) further comprises a control loop step (922) wherein, the step of introducing (922a) a second rotational speed difference between the rotational speed (RPM2) of the slave engine (3b) and the rotational speed (RPM1) of the master engine (3a) to induce a second localized phase shift and the step of measuring (922b) an altered cabin noise value (Ncab1) during said second localized phase shift are repeated in a loop till a detected minimal noise within said localized phase shift range is identified (923).

4. Process (9) according to claim 3, **characterized in that** the step (922a) of introducing a second rotational speed difference between the rotational speed (RPM2) of the slave engine (3b) and the rotational speed (RPM1) of the master engine (3a) to induce a second localized phase shift is firstly achieved by setting the rotational speed (RPM2) of the slave engine (3b) to be slightly lower than the rotational speed (RPM1) of the master engine (3a) and, if the altered cabin noise value (Ncab1) measured in step (922b) is not lower than the reference cabin noise value (Ncab0), the rotational speed (RPM2) of the slave engine (3b) is secondly set to become slightly higher than the rotational speed (RPM1) of the master engine (3a) to reverse the direction of the phase shift.

5. System (10) for setting a phase between the engines (3a, 3b) of a multi-engine aircraft (A) to minimize cabin noise and vibration, the system (10) comprising:
• a master engine (3a) and at least one slave engine (3b), each engine (3a, 3b) being coupled to a fan or a propeller;
• for each engine (3a, 3b): an engine controller (101a, 101b), a rotational speed sensor (102a, 102b) and an angular position sensor (103a, 103b);
• at least one accelerometer (104) installed in said aircraft (A) for measuring a vibration value;
• at least one microphone (105) installed in said aircraft (A) for measuring a noise value;
• an aircraft controller (106);
**characterized in that** the aircraft controller (106) and the engine controllers (101a, 101b) are configured to:
- introduce a first rotational speed difference between the rotational speed (RPM2) of the slave engine (3b) and the rotational speed (RPM1) of the master engine (3a) to induce a first continuous phase shift;
- receive the vibration value measured by said accelerometer (104) during said first continuous phase shift;
- identify a first phase (PH2) corresponding to a detected minimal vibration;
- synchronize the rotational engine speeds (RPM1, RPM2) to maintain said first phase (PH2);
- receive the reference noise value (Ncab0) measured by said microphone (105) while the rotational engine speeds (RPM1, RPM2) are synchronized and the first phase (PH2) is maintained;
- introduce a second rotational speed difference between the rotational speed (RPM2) of the slave engine (3b) and the rotational speed (RPM1) of the master engine (3a) to induce a second localized phase shift in a localized phase shift range which is around said first minimal vibration phase (PH2);
- receive the altered noise value (Ncab1) measured by said microphone (105) during said second localized phase shift;
- identify a second phase (PH1) corresponding to a detected minimal noise within said localized phase shift range;
- synchronize the rotational engine speeds (RPM1, RPM2) to maintain said second phase (PH1).

6. System (100) according to claim 5, wherein said at least one microphone (105) and said at least one accelerometer (104) are installed on an external skin of a fuselage (51) of the aircraft (A) or inside a cabin (53) of the aircraft (A).

7. System (100) according to claim 6, wherein said at least one microphone (105) and said at least one accelerometer (104) are installed along a longitudinal axis (X) of the aircraft (A).

8. System (100) according to claim 6 or 7, wherein said at least one microphone (105) and said at least one accelerometer (104) are installed in a horizontal plane (XY) comprising the fan or the propeller of the aircraft (A).

9. System (100) according to any one of claims 5 to 8, wherein the aircraft controller (106) is connected to said at least one microphone (105), said at least one accelerometer (104), and said engine controllers (101a, 101b) to receive position data (POS1, POS2) and to determine and command the rotational speeds (RPM1, RPM2) of the engines (3a, 3b).

10. System (100) according to claim 9, wherein the engine controllers (101a, 101b) are each configured to receive information from the angular position (POS1, POS2) and rotational speed (RPM1, RPM2) sensors of the engines (3a, 3b), to transmit this information to the aircraft controller (106), and to execute the speed commands received from the aircraft controller (106).

11. Aircraft (A) comprising a system (100) according to any one of claims 5 to 10.

12. A computer program product **characterized in that** it comprises instructions for implementing, by an aircraft (A), the process according to any of claims 1 to 4, when said program is executed by a processor of the aircraft (A).

13. A storage medium **characterized in that** it stores a computer program comprising instructions for implementing, by an aircraft, the process according to any of claims 1 to 4, when said program is executed by a processor of the aircraft (A).
